# EUROPÄISCHE PATENTSCHRIFT

(11) **EP 1 403 030 B1**
(45) Veröffentlichungstag und Bekanntmachung des Hinweises auf die Patenterteilung: **14.07.2010**
(21) Anmeldenummer: 03020240.2
(22) Anmeldetag: 06.09.2003
(51) Int. Cl.: B29C 65/16, F16L 33/26

(54) **Rohrverbindung**
Tube connection
Jonction de tube

(30) Priorität: 27.09.2002 DE 10245355
(43) Veröffentlichungstag der Anmeldung: 31.03.2004
(73) Patentinhaber: Evonik Degussa GmbH, 45128 Essen (DE)
(72) Erfinder: Monsheimer, Sylvia, 45721 Haltern am See (DE); Goering, Rainer, 46325 Borken (DE); Ries, Hans, Dr., 45772 Marl (DE)

(56) Entgegenhaltungen:
- EP-A- 0 839 634
- EP-A- 0 857 905
- EP-A- 1 048 439
- WO-A-00/02723
- WO-A-02/055287
- DE-A- 19 916 786
- FR-A- 2 812 372

## Beschreibung

Gegenstand der Erfindung ist eine Methode zur Verbindung einer ein- oder mehrschichtigen Rohrleitung mit einem anderen Kunststoffteil, wie z. B. einem Quickconnector.

Bekannt sind Verbindungen zwischen Rohr und Kunststoffteil, bei denen das Rohr auf das Kunststoffteil aufgedornt wird. Dabei wird das Rohr aufgeweitet, um den Nippel des Kunststoffteils aufzunehmen. Das Rohr zeichnet danach, falls vorhanden, das Profil des Nippels nach. An diese Verbindung wird der Anspruch gestellt, möglicht permeations- und leckagedicht zu sein, hohe Auszugskräfte auszuhalten und verdrehsicher zu sein. Speziell bei der Verbindung von Kraftstoffleitung und Quickconnector ist außerdem die Verwendung eines sogenannten "wedding bands" bekannt. Das "wedding band" wird vor dem Aufdomen auf das Rohr aufgeschoben und beim Aufdomen ebenfalls geweitet, so dass die Auszugskräfte durch das zusätzliche Material erhöht werden.

Besonders bei hohen Temperaturen, wie sie im Motorraum eines Kraftfahrzeugs vermehrt auftreten können, leiden die Fähigkeiten der aufgedornten Verbindung. Die Auszugsfestigkeit und die Verdrehsicherheit lassen stark nach, so dass die Dichtigkeit der Verbindung unter Umständen nicht mehr gewährleistet ist. Auch bei anderen Anwendungen, beispielsweise in der Medizintechnik, muss die Dichtigkeit und Steifigkeit der Verbindung gewährleistet sein.

Eine Möglichkeit, dieses Problem zu beseitigen, ist, die beiden zu verbindenden Komponenten zu verschweißen, beispielsweise durch Warmgasziehschweißen, Infrarotschweißen, Elektromuffenschweißen oder mittels eines Hochfrequenzfeldes. Generell haben diese Verfahren unter anderem den Nachteil, dass eine aufwendige Fixierung der zu verbindenden Teile notwendig ist, um einen Verzug in der Abkühlphase zu vermeiden. Darüber hinaus werden aufgrund der hohen Schmelzevolumina relativ große Zykluszeiten zum Aufheizen, Verbinden und Abkühlen benötigt. Insbesondere bei kleinen Wandstärken ist es sehr schwierig, eine sichere Schweißnaht mit diesen herkömmlichen Schweißtechniken zu erzielen.

In der DE-A-199 16 786 wird ein Verfahren zur Verbindung mindestens zweier aus Kunststoff bestehender Rohr- und/oder Wandelemente beschrieben, bei dem ein lasertransparenter Kunststoff mit einem Laserstrahlen absorbierenden Kunststoff durch Lasereinwirkung verschweißt wird. Dieses Verfahren ist jedoch nicht auf die Verschweißung beispielsweise einer Kraftstoffleitung mit einem Quickconnector anwendbar. Die Kraftstoffleitung ist in der Regel nicht lasertransparent, da sie üblicherweise aus mehreren Schichten aufgebaut ist und beispielsweise eine mit Ruß eingefärbte Außenschicht, eine Sperrschicht oder eine mit Ruß elektrisch leitfähig ausgerüstete Innenschicht enthält. Somit müsste der Quickconnector aus einem lasertransparenten Werkstoff bestehen. Die Einführung einer Laseroptik in den Innenkanal eines Quickconnectors kommt jedoch bei typischen Innendurchmessern von z. B. 8 mm nicht in Frage, so dass das Rohr in den Nippel geschoben werden müsste, damit der Laserstrahl durch den transparenten Werkstoff von außen bis zur Schweißstelle vordringen kann. Dabei kann aber nicht gewährleistet werden, dass das Rohr formstabil bleibt. Beult es sich ein, so ist eine leckagefreie Verbindung nicht mehr möglich. Allerdings sind Quickconnectoren üblicherweise nicht lasertransparent.

Ein weiteres Verfahren zur Verbindung zweler Flächen von thermoplastischen Kunststoff ist aus der EP-A2-1 048 439 bekannt.

Es bestand daher die Aufgabe, ein Rohr mit einem anderen Kunststoffteil durch Laserschweißung fest zu verbinden, auch wenn beide Verbindungspartner nicht für Laserlicht durchlässig sind.
a) Diese Aufgabe wird durch ein Verfahren zur Verbindung eines Kunststoffrohrs mit einem anderen Kunststoffteil gemäß Anspruch 1 oder Anspruch 2 gelöst.

Das Kunststoffrohr dient üblicherweise der Führung von Treibstoffen, Lösemitteln, Ölen, Gasen, Pflanzenschutzmitteln oder ähnlichem. In einer bevorzugten Ausführungsform ist es eine Gastransportleitung oder eine Kraftfahrzeugrohrleitung, insbesondere eine Kraftstoffleitung, eine Kühlflüssigkeitsleitung, eine Bremsflüssigkeitsleitung, eine Hydraulikflüssigkeitsleitung oder eine Scheibenwaschanlagenleitung. Das Rohr kann ein- oder mehrschichtig sein; bis zu sieben Schichten sind zur Zeit technisch realisierbar, wobei der mehrschichtige Aufbau durch die Notwendigkeit einer Sperrschicht begründet sein kann, welche die Permeation von Kraftstoffkomponenten behindert. Während die Funktionsschichten in der Regel aus einer Formmasse auf Basis von Polyamid oder Polyolefin bestehen, besteht die Sperrschicht aus einer Formmasse auf Basis von beispielsweise Polyester, Fluorpolymer oder Ethylen/Vinylalkohol-Copolymer. Eine gegebenenfalls vorhandene antielektrostatische Innenschicht besteht aus einer Formmasse, die durch Zusatz einer elektrisch leitfähigen Komponente wie etwa Leitfähigkeitsruß oder Graphitfibrillen antistatisch ausgerüstet wurde. Entsprechende Rohre sind Stand der Technik und in vielen Publikationen beschrieben. Sie können durch konventionelle Extrusion oder Coextrusion mittels einer Rohr- oder Scheibenkalibrierung hergestellt werden oder mittels formgebender Backen (Wellrohrabzug). Auch das Blasformen, beispielsweise das Saugblasformen oder das Blasformen mittels Schlauchmanipulation, sind als Herstellverfahren entsprechender Ein- oder Mehrschichtrohre bekannt.

Das mit dem Rohr zu verbindende andere Kunststoffteil kann beispielsweise ein Quickconnector, ein Abzweig, ein Ventil, ein Deckel für das Rohr oder ein anderes Rohr sein. Das Teil hat wenigstens einen Nippel, der zur Verbindung mit dem Rohr vorgesehen ist. Dieser Nippel ist auf der Außenseite mit einem Profil versehen, wie z. B. ein Tannenzapfenprofil oder ein Olivenprofil bei Quickconnectoren. Als besonders vorteilhaft für die mittels Laserschweißen hergestellte Verbindung hat sich die Kombination eines scharfkantigen Profils mit einem glatteren Profil erwiesen, beispielsweise eines Olivenprofils und eines Tannenzapfenprofils. Das Kunststoffteil besteht meist aus einem einzigen Material, kann jedoch auch aus mehreren verschiedenen Materialien bestehen und wird dann beispielsweise durch Mehrkomponentenspritzgießen hergestellt. Das Material kann auch verstärkt sein, etwa mittels Glas- oder Carbonfasern, oder es kann antielektrostatisch ausgerüstet sein, wofür ebenfalls Carbonfasem, aber auch Leitfähigkeitsruß, Graphitfibrillen oder jeder andere geeignete Zusatz in Frage kommt.

In einer weiteren Ausführungsform ist das Verbundteil Bestandteil einer medizintechnischen Apparatur, wobei ein Rohr beispielsweise mit einem Blutbeutel, einem Ventil, einem Verbindungselement oder einer Abzweigung verbunden ist.

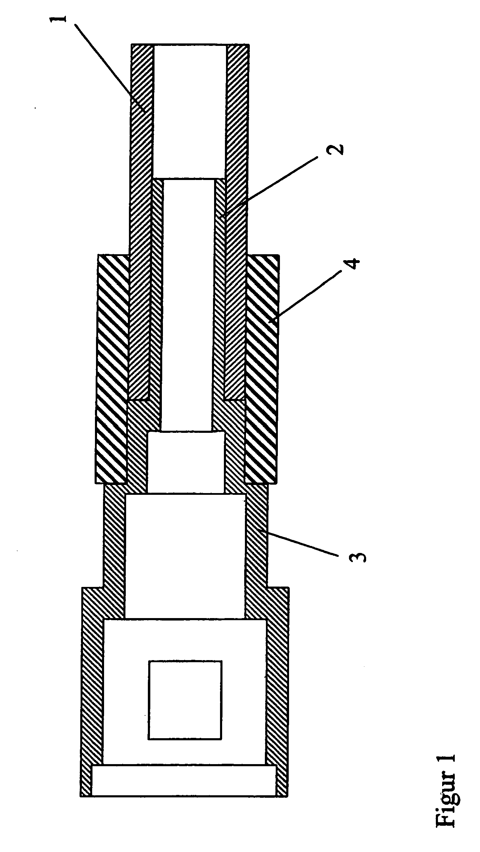

Das zusätzliche Zwischenstück aus einem für Laserlicht durchlässigen Kunststoff umhüllt die zu verbindende Stelle wie eine Manschette. Hierbei handelt es sich um eine Hülse aus thermoplastischem Material, also einen Rohrabschnitt, der die Verbindungsstelle abdeckt. Eine entsprechende Vorrichtung ist in der DE 41 27 039 A1 beschrieben; sie wird dort als "Druckhülse" bezeichnet; eine Verbindung wird dort durch Einpressen des Verbinderkörpers, also z. B. des Quickconnectors, erzielt. Damit sollen im Stand der Technik die Auszugskräfte sowie die Steifigkeit gegenüber einer seitlich wirkenden Belastung erhöht sowie die Verdrehsicherheit verbessert werden. In der **Figur 1** wird eine nicht anspruchsgemäße Ausführungsform exemplarisch erläutert. Das Rohr **1** steckt auf dem Nippel **2** eines Quickconnectors **3**; ein Teil des Rohrs **1** und, im Unterschied zur DE 41 27 039 A1, des Quickconnectors **3** ist durch ein "wedding band" **4** umhüllt. Dieses wird durch zwei umlaufende Schweißnähte (in der Fig. 1 nicht gezeigt) sowohl mit dem Quickconnector **3** als auch mit dem Rohr **1** verbunden.

In der ersten anspruchsgemäßen Ausführungsform wird das Zwischenstück aus einem für Laserlicht durchlässigen Kunststoff direkt im Zweikomponentenspritzgießverfahren mit dem anderen Kunststoffteil zusammengespritzt, so dass nur noch eine Schweißnaht zum Rohr erforderlich ist.

In der zweiten anspruchsgemäßen Ausführungsform wird das Zwischenstück mittels eines üblichen Verarbeitungsverfahrens , z. B. Spritzguss oder Extrusion, hergestellt, dann in das Werkzeug für das andere Kunststoffteil eingelegt und anschließend angespritzt oder überspritzt. In diesem Fall ist ebenfalls nur noch eine Schweißnaht zum Rohr hin erforderlich.

Wie bei der gängigen Anbindung eines Quickconnectors durch Aufdomen wird das Rohr über den Nippel am Kunststoffteil geschoben.

Das Zwischenstück besteht aus einem thermoplastischen Material, das sowohl mit dem Material der Außenfläche des Kunststoffrohrs als auch mit dem Material der Außenfläche des anderen Kunststoffteils so verträglich ist, dass eine ausreichend feste Schweißverbindung erzielt werden kann. Entsprechende Materialkombinationen sind dem Fachmann bekannt. Im einfachsten Fall bestehen beide Außenflächen aus einer PA12-Formmasse; in diesem Fall wird das Zwischenstück vorteilhafterweise aus einer Formmasse auf Basis von PA12-Homo- oder Copolymer, PA1012 oder PA 1212 bestehen, die bekanntermaßen mit PA12 verträglich sind. Möglich sind auch Ausführungsformen, bei denen das Zwischenstück mehrschichtig ausgebildet ist, wobei eine vergleichsweise dicke Außenschicht Festigkeit und Durchlässigkeit für Laserlicht gewährleistet und eine vergleichsweise dünne Innenschicht, die dann weniger ausgeprägt für Laserlicht durchlässig zu sein braucht, im Hinblick auf Materialverträglichkeit hin optimiert wird. Mann kann auf diese Weise beispielsweise ein Rohr mit einer Außenfläche aus einer PA12-Formmasse und ein anderes Kunststoffteil mit einer Außenfläche aus einer Polybutylenterephthalat(PBT)-Formmasse mit einem Zwischenstück verbinden, das eine dicke Außenschicht aus PA12 und eine dünne Innenschicht aus einem kompatibilisierten PA12/PBT-Blend besitzt, wobei die Kompatibilisierung dem Stand der Technik entsprechend z. B. durch ein PA12/PBT-Blockcopolymer oder durch ein Polyethylenimin/Polyamid-Pfropfcopolymer erfolgen kann. Die Innenschicht des Zwischenstücks lässt sich mit den beiden Außenflächen fest verschweißen.

Für Laserlicht durchlässig ist ein Kunststoff, wenn er im Wellenlängenbereich des verwendeten Lasers transparent oder transluzent ist. Generell gilt, dass reine Polymere bzw. deren Mischungen bei den vorliegenden Schichtdicken (vorzugsweise maximal 5 mm) ausreichend transparent bzw. transluzent sind. d. h. sie absorbieren nur schlecht. Falls es vom Design her verlangt wird, kann die Formmasse des Zwischenstücks, wie aus der DE 199 60 104 A1 bekannt, mittels einer Kombination von mindestens zwei Farbmitteln so eingefärbt sein, dass ein dunkler Farbeindruck resultiert, wobei im IR-Bereich bei der Wellenlänge des verwendeten Lasers die Formmasse weitgehend transparent oder transluzent sein muss.

Die Außenschicht des Kunststoffrohrs wird für Laserlicht undurchlässig eingestellt, indem der Formmasse partikelförmige Zusatzstoffe zugesetzt werden, die im Wellenlängenbereich des verwendeten Lasers das Laserlicht absorbieren, z. B. Ruß, Calciumsilikat oder Eisenoxid. Anstelle derartiger Pigmente können auch organische Farbstoffe oder UV-Absorber zugesetzt werden.

Für die Anwendung des Laserschweißverfahrens eignen sich herkömmliche Festkörperlaser, Gaslaser oder Halbleiterlaser. Die Wellenlänge des Laserstrahls liegt vorzugsweise im Bereich zwischen 400 und 2000 nm. Beim Verschweißen wird vorzugsweise eine über den Umfang durchgehende Schweißnaht gezogen. Bei erhöhten Anforderungen an die Festigkeit und Dichtigkeit können auch zwei oder mehr Schweißnähte direkt nebeneinander gezogen werden.

Mit dem erfindungsgemäßen Verfahren werden Verbindungsstellen erhalten, die auch bei höheren Temperaturen eine verbesserte Auszugsfestigkeit und Verdrehsicherheit besitzen.

## Patentansprüche

1. Verfahren zur Verbindung eines Kunststoffrohrs (1) mit einem anderen Kunststoffteil(3), **dadurch gekennzeichnet, dass**
a) die Außenschicht des Kunststoffrohrs sowie die Außenschicht des anderen Kunststoffteils weitgehend undurchlässig für Laserlicht einer bestimmten Wellenlänge ist;
b) das andere Kunststoffteil wenigstens einen Nippel (2) hat, der zur Verbindung mit dem Rohr vorgesehen ist, wobei der Nippel auf der Außenseite mit einem Profil verstehen ist;
c) das Zwischenstück (4) aus einem für Laserlicht durchlässigen Kunststoff im Zweikomponentenspritzgießverfahren mit dem anderen Kunststoffteil (3) so zusammengespritzt wird, dass das andere Kunststoffteil (3) am Ende damit umhüllt ist und
d) danach das Rohr (1) eingefügt und dieses mit mindestens einer Schweißnaht am Zwischenstück (4) mittels Laserstrahlschweißen befestigt wird.

2. Verfahren zur Verbindung eines Kunststoffrohrs (1) mit einem anderen Kunststoffteil (3), **dadurch gekennzeichnet, dass**
a) die Außenschicht des Kunststoffrohrs sowie die Außenschicht des anderen Kunststoffteils weitgehend undurchlässig für Laserlicht einer bestimmten Wellenlänge ist;
b) das andere Kunststoffteil wenigstens einen Nippel (2) hat, der zur Verbindung mit dem Rohr vorgesehen ist, wobei der Nippel auf der Außenseite mit einem Profil verstehen ist;
c) das Zwischenstück (4) aus einem für Laserlicht durchlässigen Kunststoff zunächst in das Werkzeug für das andere Kunststoffteil (3) eingelegt und dann angespritzt oder überspritzt wird und
d) danach das Rohr (1) eingefügt und dieses mit mindestens einer Schweißnaht am Zwischenstück (4) mittels Laserstrahlschweißen befestigt wird.

3. Verfahren gemäß einem der vorhergehenden Ansprüche
**dadurch gekennzeichnet,**
**dass** das Kunststoffrohrs (1) ein Mehrschichtrohr ist, das eine Sperrschicht und/oder eine antielektrostatisch ausgerüstete Innenschicht enthält.

4. Verfahren gemäß einem der vorhergehenden Ansprüche,
**dadurch gekennzeichnet,**
**dass** das andere Kunststoffteil (3) ein Quickconnector, ein Abzweig, ein Ventil oder ein Deckel für das Rohr ist.

5. Verfahren gemäß einem der Ansprüche 1 bis 3,
**dadurch gekennzeichnet,**
**dass** das andere Kunststoffteil (3) ebenfalls ein Rohr ist.

6. Verfahren gemäß einem der vorhergehenden Ansprüche,
**dadurch gekennzeichnet,**
**dass** das Zwischenstück (4) eine Hülse ist.

7. Verfahren gemäß einem der Ansprüche 1 bis 4,
**dadurch gekennzeichnet,**
**dass** das Zwischenstück (4) am Rohr (1) mit mindestens einer umlaufenden Naht angeschweißt wird.

## Claims

1. Method for connecting a plastic pipe (1) to another plastic part (3), **characterized in that**
a) the outer layer of the plastic pipe and the outer layer of the other plastic part are largely opaque to laser light of a certain wavelength;
b) the other plastic part has at least one nipple (2), which is provided for the connection to the pipe, the nipple being provided on the outside with a profile;
c) the adaptor (4) of a material transmissive to laser light is molded together with the other plastic part (3) by the two-component injection-molding process such that the other plastic part (3) is sheathed at the end thereby, and
d) after this the pipe (1) is inserted and is fastened to the adaptor (4) by means of at least one weld by means of laser-beam welding.

2. Method for connecting a plastic pipe (1) to another plastic part (3), **characterized in that**
a) the outer layer of the plastic pipe and the outer layer of the other plastic part are largely opaque to laser light of a certain wavelength;
b) the other plastic part has at least one nipple (2), which is provided for the connection to the pipe, the nipple being provided on the outside with a profile;
c) the adaptor (4) of a plastic transmissive to laser light is firstly placed into the mold for the other plastic part (3) and then molded on or overmolded, and
d) after this the pipe (1) is inserted and is fastened to the adaptor (4) by means of at least one weld by means of laser-beam welding.

3. Method according to either of the preceding claims, **characterized in that** the plastic pipe (1) is a multi-layer pipe which includes a barrier layer and/or an antistatic inner layer.

4. Method according to one of the preceding claims, **characterized in that** the other plastic part (3) is a quick connector, a branch, a valve or a cover for the pipe.

5. Method according to one of Claims 1 to 3, **characterized in that** the other plastic part (3) is also a pipe.

6. Method according to one of the preceding claims, **characterized in that** the adaptor (4) is a sleeve.

7. Method according to one of Claims 1 to 4, **characterized in that** the adaptor (4) is welded onto the pipe (1) by at least one peripheral weld.

## Revendications

1. Procédé pour la jonction d'un tube en matière plastique (1) avec une autre pièce en matière plastique (3), **caractérisé en ce que**
a) la couche extérieure du tube en matière plastique ainsi que la couche extérieure de l'autre pièce en matière plastique sont largement imperméables à la lumière laser d'une longueur d'onde déterminée;
b) l'autre pièce en matière plastique comporte au moins un manchon (2), qui est prévu pour la jonction avec le tube, le manchon étant pourvu d'un profil sur le côté extérieur;
c) la pièce intermédiaire (4) en une matière plastique perméable à la lumière laser est formée par projection avec l'autre pièce en matière plastique (3) par un procédé de moulage par projection à deux composants, de telle manière que l'autre pièce en matière plastique (3) soit entourée par celle-ci à son extrémité; et
d) le tube (1) est ensuite introduit et celui-ci est fixé sur la pièce intermédiaire (4) avec au moins un cordon de soudure par soudage au faisceau laser.

2. Procédé pour la jonction d'un tube en matière plastique (1) avec une autre pièce en matière plastique (3), **caractérisé en ce que**
a) la couche extérieure du tube en matière plastique ainsi que la couche extérieure de l'autre pièce en matière plastique sont largement imperméables à la lumière laser d'une longueur d'onde déterminée;
b) l'autre pièce en matière plastique comporte au moins un manchon (2), qui est prévu pour la jonction avec le tube, le manchon étant pourvu d'un profil sur le côté extérieur;
c) la pièce intermédiaire (4) en une matière plastique perméable à la lumière laser est d'abord posée dans l'outil pour l'autre pièce en matière plastique (3) et est ensuite soumise à une projection ou recouverte par projection; et
d) le tube (1) est ensuite introduit et celui-ci est fixé sur la pièce intermédiaire (4) avec au moins un cordon de soudure par soudage au faisceau laser.

3. Procédé selon l'une quelconque des revendications précédentes, **caractérisé en ce que** le tube en matière plastique (1) est un tube à plusieurs couches, qui comprend une couche de barrière et/ou une couche interne traitée de façon anti-électrostatique.

4. Procédé selon l'une quelconque des revendications précédentes, **caractérisé en ce que** l'autre pièce en matière plastique (3) est un raccord rapide, un branchement, une soupape ou un couvercle pour le tube.

5. Procédé selon l'une quelconque des revendications 1 à 3, **caractérisé en ce que** l'autre pièce en matière plastique (3) est également un tube.

6. Procédé selon l'une quelconque des revendications précédentes, **caractérisé en ce que** la pièce intermédiaire (4) est une douille.

7. Procédé selon l'une quelconque des revendications 1 à 4, **caractérisé en ce que** la pièce intermédiaire (4) est soudée sur le tube (1) avec au moins une soudure périphérique.
